(19) Europäisches Patentamt
European Patent Office
Office européen des brevets

(11) **EP 4 394 617 B1**

(12) **EUROPEAN PATENT SPECIFICATION**

(45) Date of publication and mention
of the grant of the patent:
**14.05.2025  Bulletin 2025/20**

(21) Application number: **22901555.7**

(22) Date of filing: **11.10.2022**

(51) International Patent Classification (IPC):
*G06F 16/11* *(2019.01)*    *G06F 16/14* *(2019.01)*
*G06F 16/182* *(2019.01)*    *G06N 3/08* *(2023.01)*
*G06F 16/16* *(2019.01)*

(52) Cooperative Patent Classification (CPC):
**G06F 16/162; G06F 16/11; G06F 16/14;**
**G06F 16/182; G06N 3/08**

(86) International application number:
**PCT/KR2022/015238**

(87) International publication number:
**WO 2023/101195 (08.06.2023 Gazette 2023/23)**

(54) **ELECTRONIC DEVICE AND METHOD FOR OPERATING FILE SYSTEM OF ELECTRONIC DEVICE**

ELEKTRONISCHE VORRICHTUNG UND VERFAHREN ZUM BETRIEB EINES DATEISYSTEMS EINER ELEKTRONISCHEN VORRICHTUNG

DISPOSITIF ÉLECTRONIQUE ET PROCÉDÉ DE FONCTIONNEMENT D'UN SYSTÈME DE FICHIER DE DISPOSITIF ÉLECTRONIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **03.12.2021  KR 20210172447**

(43) Date of publication of application:
**03.07.2024  Bulletin 2024/27**

(73) Proprietor: **Samsung Electronics Co., Ltd.**
**Suwon-si, Gyeonggi-do 16677 (KR)**

(72) Inventors:
  • **KIM, Jaewook**
    **Suwon-si, Gyeonggi-do 16677 (KR)**
  • **GIL, Yeongjin**
    **Suwon-si, Gyeonggi-do 16677 (KR)**
  • **SEO, Sungjong**
    **Suwon-si, Gyeonggi-do 16677 (KR)**
  • **LEE, Woojoong**
    **Suwon-si, Gyeonggi-do 16677 (KR)**

(74) Representative: **HGF**
**HGF Limited**
**1 City Walk**
**Leeds LS11 9DX (GB)**

(56) References cited:
KR-A- 20180 050 860    KR-A- 20200 068 941
KR-A- 20210 097 493    KR-A- 20210 097 493
KR-A- 20210 132 453    US-A1- 2015 220 552
US-A1- 2015 220 552    US-A1- 2016 019 254
US-A1- 2018 129 426    US-A1- 2020 183 588
US-A1- 2021 334 029

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 394 617 B1

# Description

**[Technical Field]**

Various embodiments of the disclosure relate to an electronic device, for example, to an electronic device including a storage and an operating method thereof.

**[Background Art]**

Recently developed electronic devices such as a smart phone, a tablet PC, a portable multimedia player (PMP), a personal digital assistant (PDA), a laptop personal computer (laptop PC), and a wearable device are capable of not only providing mobility but also performing various functions (e.g., a game, a social network service (SNS), Internet, multimedia, and taking and executing a picture/video).

The electronic device may include a storage device such as a NAND flash memory or a solid state disk (SSD) to store high-capacity data required to perform various functions.

The electronic device can write at least some data of an application in a main memory by using a file system that is a sort of program module or software that can be executed by a processor. Also, the electronic device may classify the types of files being written using the file system at a time when application data is written on the main memory, and may control them to be separately stored in storage.

Utilizing a write pattern from a time when a file is written in a page cache to a time when it is stored in the storage, the electronic device may distinguish and store a file (hot file) in which file modification and deletion frequently occurs and a file (cold file) in which change rarely occurs after the file is stored.

The technique to distinguish and separate the hot/cold files is being handled in various ways in the field of storage and file system. The reason is that if the hot/cold files are well separated and stored, the garbage collection operation is minimized by referring to this information in the NAND storage or the file system, or fragmentation is minimized by continuously storing data blocks when storing the cold file of a relatively large size compared to the hot file, and it is possible to optimize file storing performance and NAND storage lifespan.

The existing technique to separate the hot/cold files is utilizing various methods such as the simplest method of predicting the possibility of file change based on the file name extension (.xml, .db, .jpg, .mp4, etc.), a method of predicting based on directory characteristics designated for each OS, and a method of predicting through a block write size.

US 2018/0129426 discloses techniques for storing data in a plurality of storage tiers on a computing node. A node receives a request to write data corresponding to at least a first portion of a file and determines whether to perform the request either as an in-place write or as an out-of-place write. Upon determining to perform the request as the in-place write, the node writes the data to a first location on a storage tier which currently stores the first portion of the file. Upon determining to perform the request as the out-of-place write, the node writes the data to a second location on one of the storage tiers, other than the first location.

**[Disclosure of Invention]**

The invention is set out in the appended independent claims. Advantageous embodiments are defined by the appended dependent claims.

**[Technical Problem]**

In case of classifying the hot/cold files based on a predefined rule, it may have a limitation that it is difficult to predict the type of a file by a file name extension when a file with a file name extension used only in a certain application is generated (for example, .exo file in case of Youtube cache) or when there is no file name extension.

In addition, although a predefined directory name may be used to separate the hot/cold files, there is a limitation as in case of using the file name extension that it is difficult to predict the type of a file by the directory name when a new directory name or an ambiguous directory name is used.

**[Solution to Problem]**

According to various embodiments of the disclosure, an electronic device includes a random access memory, a storage, and a processor. The processor is configured to write a file of an application in the memory in response to a file input request of the application, to identify a write pattern of the file at a first time of writing the file of the application in the memory, followed by updating the write pattern in the memory, to classify the file as one of a hot file and a cold file based on the write pattern of the file at a second time of copying the file written in the memory to the storage, and to control storing a classification result of the file together with the file in the storage or storing the file in a first area or a second area of the storage based on the classification result of the file. The hot file is a file whose modification and/or deletion occurs frequently compared to the cold file, and the cold file is a file whose modification and/or deletion occurs infrequently compared to the hot file. The write pattern includes a degree of modification of the file. The processor is further configured to control learning the write pattern for each file by using machine learning; assign a weight to at least one feature of the write pattern for the hot file based on a learning result; an assign a weight to at least one feature of the write pattern for the cold file based on the learning result.

According to various embodiments of the disclosure, a file system operating method of an electronic device includes writing a file of an application in a memory in response to a file input request of the application, identifying a write pattern of the file at a first time of writing the file of the application in the memory, followed by updating the write pattern in the memory, classifying the file as a hot file or a cold file based on the write pattern of the file at a second time of copying the file written in the memory to a storage, and storing a classification result of the file together with the file in the storage or storing the file in a first area or a second area of the storage based on the classification result of the file. The hot file is a file whose modification and/or deletion occurs frequently compared to the cold file, and the cold file is a file whose modification and/or deletion occurs infrequently compared to the hot file. The write pattern includes a degree of modification of the file. The method comprises controlling learning the write pattern for each file by using machine learning; and assigning a weight to at least one feature of the write pattern for the hot file and the cold file based on a learning result.

**[Advantageous Effects of invention]**

According to various embodiments, the electronic device can predict a file type by utilizing a write pattern that can be identified during a file writeback, even in case that there is no or ambiguous file name extension or directory setting.

According to various embodiments, the electronic device can collect file write patterns at runtime without a file name extension or directory setting, and predict a file type by using the collected pattern information.

According to various embodiments, before requesting to store the contents of the page cache in storage, the writeback thread module of the disclosure can predict a hot file or a cold file by using the previously collected write pattern information for each file. Based on the predicted result, the electronic device can tag hint information when storing the file in the storage or store it in divided areas by the file system itself, thereby optimizing the storing performance of the storage and improving the lifespan of the storage.

According to various embodiments, the electronic device can perform learning on the numerical values of features of each write pattern in various environments (e.g., a mobile environment such as Android and a cloud server environment) and thereby increase the prediction accuracy of hot/cold files.

**[Brief Description of Drawings]**

FIG. 1 is a block diagram illustrating an electronic device in a network environment according to various embodiments.
FIG. 2A illustrates a file classification operation of an electronic device according to a comparative embodiment.
FIG. 2B illustrates a file classification operation of an electronic device according to various embodiments.
FIG. 3 is a block diagram illustrating components of an electronic device according to various embodiments.
FIGS. 4 and 5 are diagrams illustrating a process of utilizing classified files in a garbage collection operation in an electronic device according to various embodiments.
FIG. 6 is a flowchart illustrating a method of operating a file system of an electronic device according to various embodiments.

**[Mode for the Invention]**

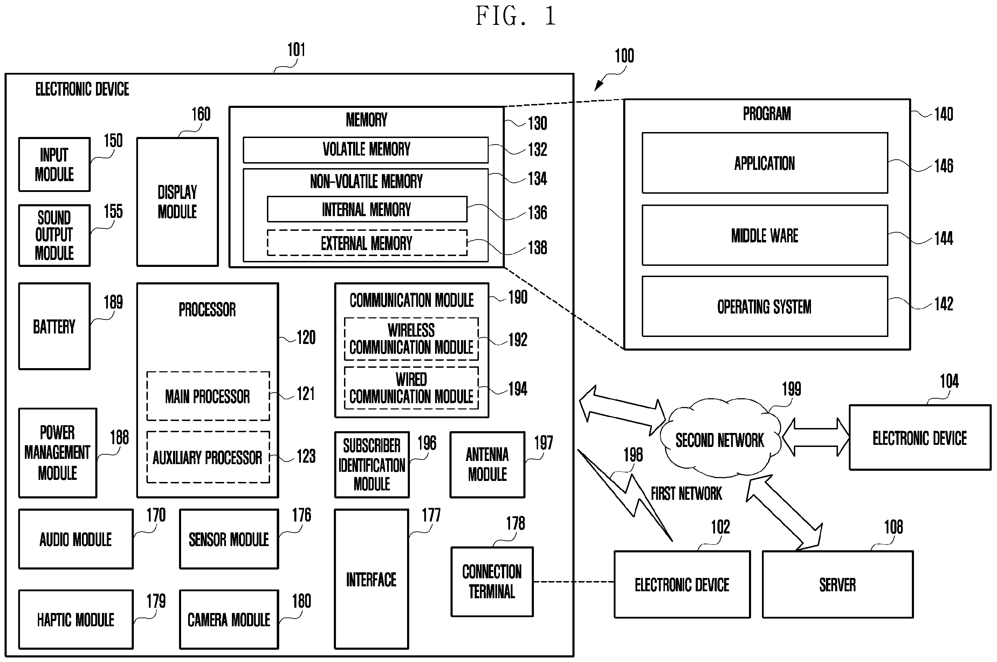

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module.

According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments. The invention is defined by the scope of the claims. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

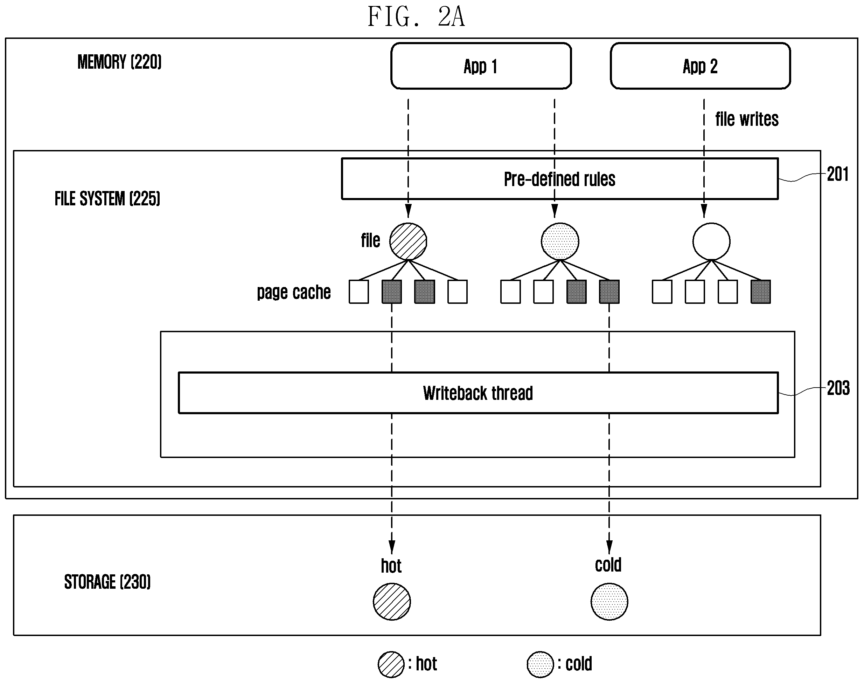

FIG. 2A illustrates a file classification operation of an electronic device according to a comparative embodiment.

The electronic device according to the comparative embodiment may include a processor (e.g., the processor 120 in FIG. 1), a memory 220, and a storage 230. The processor 120 may classify and store files in the memory 220 in response to a file write request of at least one application. In this case, the processor 120 may classify the file as either a hot file or a cold file according to a predefined rule 201 on a file system 225 in the memory 220. The hot file may refer to a file whose modification and/or deletion occurs relatively frequently compared to the cold file. The cold file may refer to a file whose modification and/or deletion occurs relatively infrequently compared to the hot file. The hot file may include, for example, DB and xml files, and the cold file may include, for example, media files such as photos and videos. The predefined rule 201 may include, for example, at least one of a method for predicting the possibility of a file change based on a file name extension (.xml, .db, .jpg, .mp4, etc.), a method for predicting it based on directory characteristics specified for each specific OS, or a method for predicting it through a block write size or the like.

The memory 220 may include the file system 225 that is a sort of program module (e.g., the program module 140 in FIG. 1) that can be executed by the processor 120. Using the file system 225, the electronic device may separately store a plurality of files in the storage 230.

Using a writeback thread 203, the processor 120 may check file classification information and whether file data in the memory 220 is identical with file data stored in the storage 330. If the file data in the memory 220 is not identical with the file data stored in the storage 330, the processor 120 may control writeback to be performed.

The writeback may refer to an operation of updating only the cache of the memory 320, not the storage 330, when writing data of a file. That is, when writing the data of the file, the processor 310 may not write it in the storage 330 while updating only the cache and, only when necessary, may control the writing in a main memory device including the storage 330 or in an auxiliary memory device.

However, because the electronic device according to the comparative embodiment classifies files using the predefined rule 210, it may have a limitation that it is difficult to predict the type of a file by the file name extension in case that a file with a file name extension used only in a certain application is generated (for example, .exo file in case of Youtube cache) or there is no file name extension. Also, the electronic device according to the comparative embodiment may classify files based on predefined directory names, but it may be difficult to predict the type of a file based on the directory name, similarly to the case of using the file name extension.

Hereinafter, an electronic device and a file system operating method thereof for overcoming the above-mentioned limitation will be described.

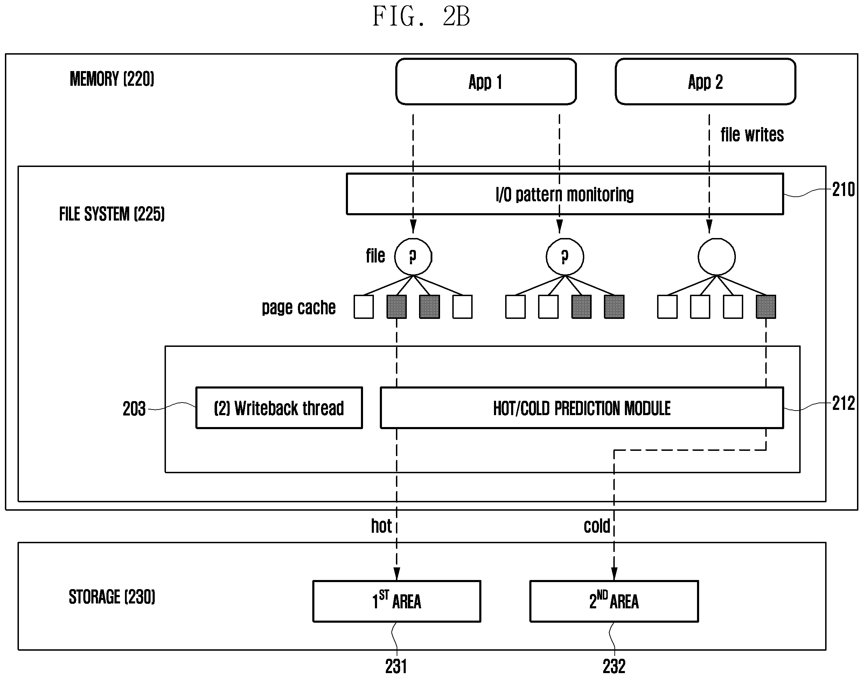

FIG. 2B illustrates a file classification operation of an electronic device according to various embodiments.

The electronic device shown in FIG. 2B (e.g., the electronic device 101 in FIG. 1) may include a processor (e.g., the processor 120 in FIG. 1), a memory 220, and a storage 230. In this case, the memory 220 may include the volatile memory 132 in FIG. 1, and the storage 230 may include the non-volatile memory 134 in FIG. 1. The processor 120 may write a file in the memory 220 in response to a file write request of at least one application. In this case, the electronic device 101 in FIG. 2B may classify the file by using a write pattern of application file instead of a predefined rule (e.g., 212 in FIG. 2A).

The electronic device 101 according to various embodiments of the disclosure is capable of distinguishing and storing a hot file that is frequently modified and deleted and a cold file that rarely changes after stored, by utilizing a write pattern of at least a part of a time period between a time a file is written to the page cache on the memory 220 and a time it is stored in the storage 230.

According to an embodiment, the memory 220 may include a file system 225 that is a sort of program module (e.g., the program module 140 in FIG. 1) that can be executed by the processor 120. Using the file system 225, the electronic device may classify the types of files and separately store them in the storage 230.

According to an embodiment, the storage 230 may include a first area 231 for storing the hot file. Also, the storage 230 may include a second area 232 for storing the cold file. The electronic device 101 may store the hot file frequently modified and deleted in the first area 231, and store the cold file rarely changing after stored in the second area 232.

The electronic device 101 according to various embodiments of the disclosure may update only information related to a write pattern of a file at the time of storing the file in the memory 220. Thereafter, the electronic device 101 may calculate a probability so that the type of the file can be distinguished using the writeback thread 212 at the time of sending data of the file down to the storage 330. The electronic device 101 may prevent a response delay due to the probability calculation by adjusting the timing of the probability calculation.

According to an embodiment, the file system 225 may include a write pattern monitor module 210 and a writeback thread module 212. The write pattern monitor module 210 may detect an application's request for writing a file in the file system 225, and monitor main characteristics (hereinafter, referred to as 'write pattern' or 'first pattern') of a write operation. The write pattern monitor module 210 may temporarily store the monitored write pattern of a file in a file object (not shown) in the memory 220.

According to an embodiment, a feature of a write pattern of a file may include at least one of an overwrite count, an append count, a write chunk, and a system call count (fsync). Hereinafter, such features of a write pattern and a file classification method will be described.

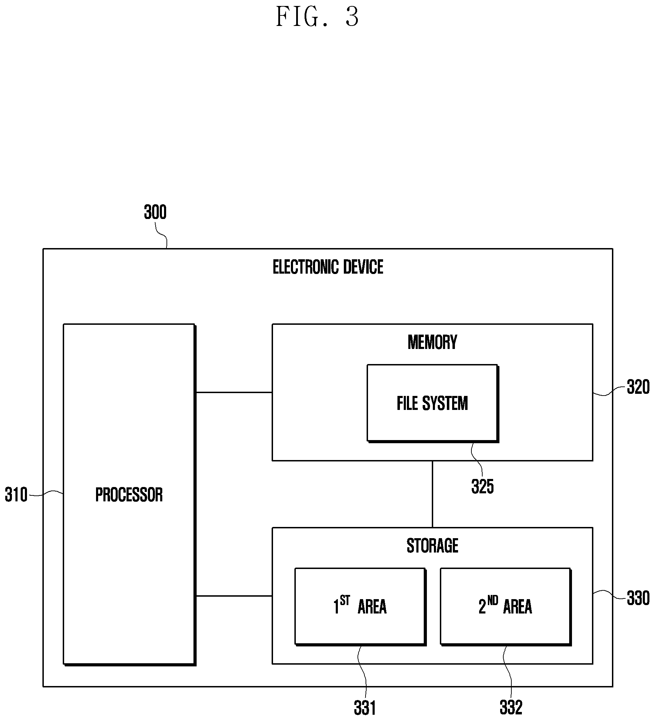

FIG. 3 is a block diagram illustrating components of an electronic device according to various embodiments.

With reference to FIG. 3, the electronic device 300 may include a processor 310, a memory 320, and a storage 330, and some of the illustrated components may be omitted or replaced. The electronic device 300 may further include at least some of the components and/or functions of the electronic device 101 shown in FIG. 1. At least some of the respective components of the illustrated (or not illustrated) electronic device may be operatively, functionally, and/or electrically connected.

According to various embodiments, the processor 310 is a component capable of performing an operation or data processing related to control and/or communication of respective components of the electronic device 300, and may be composed of one or more processors. The processor 310 may include at least some of the configuration and/or functions of the processor 120 shown in FIG. 1.

According to various embodiments, there will be no limitations on the operation and data processing functions that the processor 310 can implement in the electronic device 300, but hereinafter features related to the control of the file system 325 in the memory 320 will be described in detail. The operations of the processor 310 may be performed by loading instructions stored in the memory 320 (e.g., the memory 130 in FIG. 1). The file system 325 may refer to a system for storing or organizing files or data to be easily found or accessed in the electronic device 300. The file system 325 according to various embodiments of the disclosure may control storing and managing files and directories in the storage 330 and the memory 320.

According to various embodiments, the electronic device 300 may include at least one memory 320 and a storage 330. In this case, the memory 320 may include the volatile memory 132 in FIG. 1, and the storage 330 may include the non-volatile memory 134 in FIG. 1. The memory 320 may include a volatile memory such as dynamic random access memory (DRAM), static RAM (SRAM), or synchronous dynamic RAM (SDRAM). The storage 330 may include at least one of one-time programmable ROM (OTPROM), PROM, EPROM, EEPROM, mask ROM, flash ROM, flash memory, hard drive, or solid state drive (SSD). Alternatively, the memory 320 may include a large-capacity storage device as a non-volatile memory and. For example, the memory 320 may include at least one of one-time programmable ROM (OTPROM), PROM, EPROM, EEPROM, mask ROM, flash ROM, flash memory, hard drive, or solid state drive (SSD). The memory 320 may store various file data, and the stored file data may be updated according to the operation of the processor 310.

According to various embodiments, the file system 325 may refer to a system that is usable by intercepting a system call at a kernel level without a separate daemon. The daemon may mean a background process that is executed when the system is first started. The file system 325 may wait for a user's request in a state where the daemon is stored in the memory 320, and upon occurrence of the user's request, recognize the user's request.

According to various embodiments, the file system 325 may provide a file in response to a request of an application layer. The file system 325 may be located on a kernel layer. The operation of providing the file may refer to an operation of opening and reading a requested file or reading an already opened file and delivering it to the application layer. The operation of opening the file may refer to an operation of finding a file name in a storage device and preparing for reading and/or writing in the application layer. The operation of reading the file may refer to an operation of loading data of an opened file into the memory 320. Loading may refer to an operation of calling a program itself and resources required for an operation from an auxiliary storage device (e.g., a hard disk) into a main storage device (e.g., a memory).

According to an embodiment, in response to the request of the application layer, the file system 325 may read the requested file and provide it to the application layer if the requested file exists in the upper file system in the memory 320, or read the file in the storage 330 and provide it to the application layer if the requested file does not exist in the upper file system.

According to various embodiments, the processor 310 may execute a variety of software (e.g., the program 140). The memory 320 may include the file system 325. The file system 325 is a program module stored in the memory 320 and may be operated by the processor 310.

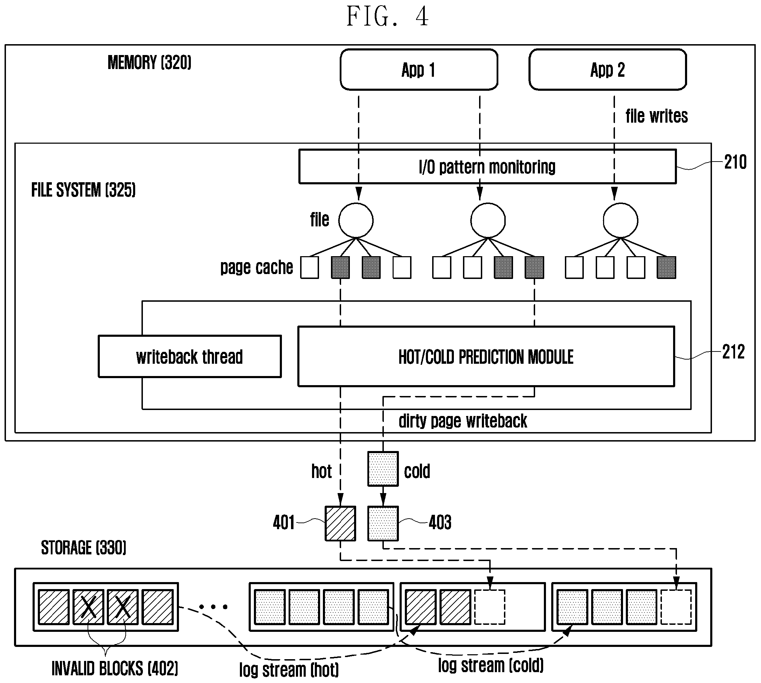

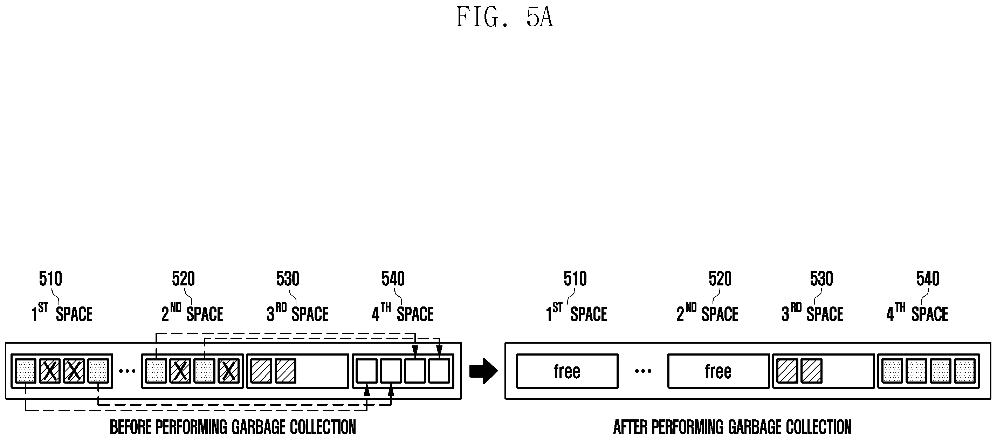

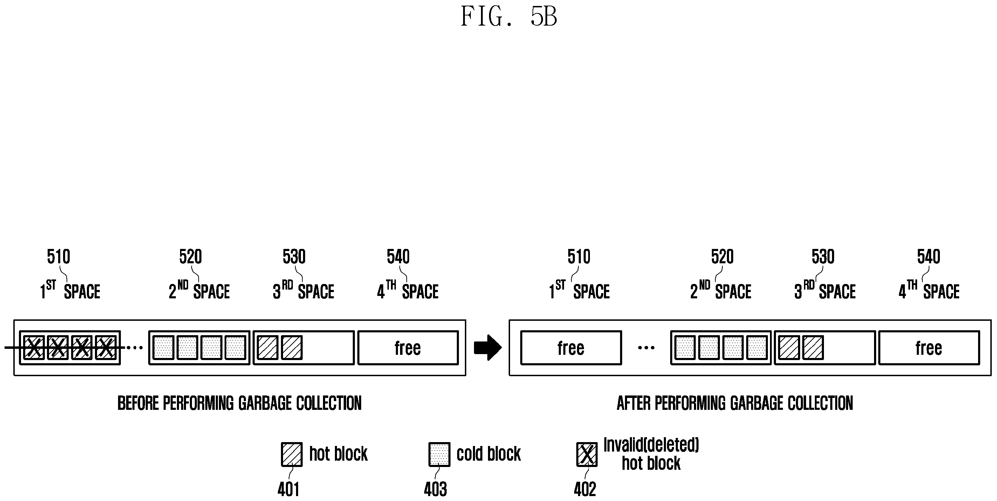

According to various embodiments, the processor 310 may store data in the form of a file in the storage 330 through the file system 325. The file system 325 may refer to a data structure or system managed by the processor 310 to store data in the storage 330. The electronic device 300 may utilize the file system 325 to write data in the storage 330 or to efficiently read data stored in the storage 330. In various embodiments, the file system 325 is described on the assumption that it is implemented as a flash friendly file system (F2FS), but the form of the file system 325 is not limited to the F2FS and any other form of file system may be included. The F2FS may refer to a file system optimized for NAND flash memory based on log-based storage. The F2FS will be described with reference to FIGS. 4 and 5.

According to various embodiments, the storage 330 may include a first area 331 for storing a first file or hot file. Also, the storage 330 may include a second area 332 for storing a second file or cold file.

The first file or hot file may refer to a file whose modification and/or deletion occurs relatively frequently compared to the cold file. The second file or cold file may refer to a file whose modification and/or deletion does not occur relatively frequently compared to the hot file.

According to various embodiments, the file system 325 may include a write pattern monitor module (e.g., the write pattern monitor module 210 in FIG. 2) and a writeback thread module (e.g., the writeback thread module 212 in FIG. 2). The write pattern monitor module 210 may detect an application's request for writing a file in the file system 325, and monitor main characteristics (hereinafter, referred to as 'write pattern' or 'first pattern') of a write operation. The write pattern monitor module 210 may temporarily store the monitored pattern of a file in a file object (not shown) in the memory 320.

According to an embodiment, a feature of a write pattern of a file may include at least one of an overwrite count, an append count, a write chunk, and a system call count (fsync).

The overwrite count may refer to the number of times to modify a part of a file in the middle. For example, in case that some cells are modified in an Excel file, the processor 310 may classify the file as the overwrite count when saving the file. If the overwrite count of the file is relatively large, the processor 310 may determine that the modifications of the file is frequent, and thereby classify the file as close to a hot file.

The append count may refer to the number of times to newly append other data to an existing file. For example, in case that new data is added in a jpg file beyond a partial modification level of the file, the processor 310 may classify the file as the append count when saving the file. If the append count of the file is relatively large, the processor 310 may determine that new content is often added to the file, and thereby classify the file as close to a cold file.

The write chunk may refer to a size unit of a file stored in an operation of writing the file in the memory 320. For example, in case that the write chunk is relatively small, the processor 310 may determine that a small amount of write is performed during one write operation, and classify it as close to a hot file. Conversely, in case that the write chunk is relatively large, the processor 310 may determine that a large amount of write is performed during one write operation, and classify it as close to a cold file.

The system call count (fsync) may refer to the number of times that a file recorded in the memory 320 is sent down or written to the storage 330. For example, in case that the fsync is relatively low, the processor 310 may determine that a file recorded in the memory 320 is a file with a relatively small number of times being written to the storage 330. That is, in case that the fsync is relatively low, the processor 310 may determine that the file is not frequently modified, and classify it as close to a cold file. Conversely, in case that the fsync is relatively high, the processor 310 may determine that the file is modified relatively frequently, and classify it as close to a hot file. If the fsync is less than a first level, the processor 310 may determine that the file is not frequently modified, and classify it as close to a cold file. For example, when the fsync is less than 3, the processor 310 may determine that the file is not frequently modified, and classify it as close to a cold file. In this case, the numerical value or the first level of the fsync may not be limited to the above, and may be determined by a developer's setting up or through machine learning that learns a plurality of files.

According to an embodiment, the processor 310 may classify a specific file as a hot file or a cold file, based on the above-mentioned at least one feature of the write pattern. However, even if referring to the features of the write pattern when classifying a specific file as a hot file or a cold file, the criteria for classifying the file type based on what numerical value may be ambiguous. For example, in case that the fsync of a specific file is relatively high, the electronic device 300 may determine the file as being modified relatively frequently, and classify it as close to a hot file. However, whether the numerical value of the fsync is relatively high or low may vary depending on criteria, and it may be difficult for users to determine such criteria.

According to an embodiment, the electronic device 300 may learn write patterns of files by using machine learning and establish a criterion for classifying the files. The electronic device 300 may identify a write pattern of a specific file and, based on a feature of the identified write pattern, determine a feature of a write pattern of a hot file and a feature of a write pattern of a cold file. For example, in case that a file name extension is xml (i.e., the file name extension of an Excel file), the file may be close to a hot file whose modification is relatively frequent. The electronic device 300 may identify a write pattern and feature of the xml file by using machine learning. The electronic device 300 may identify at least one of the write pattern of the xml file and information that the xml file is close to a hot file, and control an artificial intelligence model to learn the write pattern and feature of the hot file. In this case, as mentioned above, the feature may include at least one of the overwrite count, the append count, the write chunk, and the system call count (fsync).

Or, for example, in case that the file name extension is jpg (i.e., the file name extension of a photo or picture file), the file may be close to a cold file whose modification occurs infrequently. The electronic device 300 may identify a write pattern and feature of the jpg file by using machine learning. The electronic device 300 may identify at least one of the write pattern of the jpg file and information that the jpg file is close to a cold file, and control the artificial intelligence model to learn the writing pattern and feature of the cold file.

The electronic device 300 may perform the machine learning using various files and classify each of the various files as one of a hot file and a cold file. The machine learning may be executed in an auxiliary processor (e.g., the auxiliary processor 123 in FIG. 1) or an NPU processor included in the processor 310 or executed in a main processor (e.g., the main processor 121 in FIG. 1). The processor 310 (e.g., the NPU processor) may provide a service of the electronic device 300 according to various embodiments of the disclosure by using an artificial intelligence model. For example, the processor 310 (e.g., the NPU processor) may recognize a file write pattern and, based on this, determine whether a specific file is classified as a hot file or a cold file.

According to an embodiment, the storage 330 may include an artificial intelligence model for recognizing a file write pattern and classifying a specific file based thereon. The main processor 121 may control the artificial intelligence model to perform machine learning using the NPU processor. The main processor 121 may control the artificial intelligence model to identify the type of a file written in the memory 320 based on this learning. A learning process of the artificial intelligence model will be described with reference to FIGS. 4 to 5.

The electronic device 300 may identify whether a file is a hot file or a cold file, and also obtain data about a write pattern and feature of the hot file. In addition, the electronic device 300 may identify whether a file is a hot file or a cold file, and also obtain data about a write pattern and feature of the cold file. For example, while performing the machine learning on various files, the electronic device 300 may determine the distribution of the system call count (fsync) of the hot file and the distribution of the system call count (fsync) of the cold file. Based on this learning, the electronic device 300 may identify the system call count (fsync) for an arbitrary file and classify, based on the numerical value of the system call count (fsync), whether the arbitrary file is a hot file or a cold file.

Using such machine learning, the electronic device 300 may learn more and more files and establish increasingly a sophisticated classification criterion for the numerical value of the system call count (fsync).

The number of files or write pattern features that the electronic device 300 can learn using the machine learning is not limited to the overwrite count, the append count, the write chunk, and the system call count (fsync). Using the machine learning, the electronic device 300 may learn any write pattern feature other than the aforementioned overwrite count, append count, write chunk, and system call count (fsync). Such other write pattern features may include, for example, at least one of a file size, a file modification time, a modification interval, a dirty page count, an append write count, an overwrite count, a chunk size, a fsync count, a directory name, and a use specific file system. Here, the directory name may refer to the name of a folder (directory) in which a file is stored. For example, in case that a file is stored in a temporary folder (temp), the processor 310 may classify the file as close to a hot file.

According to an embodiment, the electronic device 300 may update a weight of a feature of a write pattern by using the machine learning. For example, in case of performing learning by using a hot file, the electronic device 300 may increase weights for the fsync count and the overwrite count. In case of performing learning by using a cold file, the electronic device 300 may increase weights for the write chunk, the dirty page count, and the append count. The write chunk may denote an average file size upon a file write request, and in case of a cold file, a file size modified in response to a single write request may be relatively large because the modification is not frequent. Thus, the cold file may have a relatively high write chunk, and the electronic device 300 may increase the weight of the write chunk for the cold file after learning through the machine learning.

According to an embodiment, the dirty page may denote a file whose contents are different between the memory 320 and the storage 330. In case that a file is frequently modified, the contents of the file in the memory 320 may be different from those of the file stored in the storage 330. In case of a cold file, a write operation to the storage 330 does not occur relatively frequently, and many writes may be performed at once. In this case, because of a low number of times of writes, the cold file may contain relatively many dirty pages compared to the hot file. So, the cold file may have relatively many dirty pages, and the electronic device 300 may increase the weight of the dirty page count for the cold file after learning through the machine learning.

According to an embodiment, a method of obtaining weights using the machine learning may include a method of performing regression analysis. Regression may refer to a phenomenon that a plurality of distributed values are gathered in an average or representative state. The regression analysis method may include logistic regression or multiple linear regression.

The method of obtaining the weights using the machine learning may include a method of applying a 'pre-learned regression expression' through various write patterns in advance upon applying the regression. Alternatively, the method of obtaining the weights using the machine learning may include a method of learning the electronic device 300 in real time.

The electronic device 300 may classify an arbitrary file as a hot file or a cold file, based on a fixed regression expression obtained as a result of external learning in advance by applying the pre-learned regression expression. Alternatively, the electronic device 300 may learn various write patterns in real time. In this case, after learning using a write pattern stored by the write pattern monitor module (e.g., the write pattern monitor module 210 in FIG. 2), the electronic device 300 may update the regression expression by itself at a specific time or at a specific period.

According to an embodiment, the electronic device 300 may perform learning in each environment by using write patterns of files collected in different environments. For example, the electronic device 300 may learn a write pattern requested by an application in a mobile environment including Android. Also, the electronic device 300 may learn a write pattern requested by an application process in a cloud server environment. The environments in which the electronic device 300 can learn are not limited to the mobile environment and the cloud server environment. A difference in processing power for machine learning processing between respective environments may occur. Performing learning in each environment, the electronic device 300 may improve prediction accuracy upon classifying arbitrary files.

According to an embodiment, the electronic device 300 may update the write pattern of the file at the time of storing the file in the page cache of the memory 320, and calculate a probability of how quickly the file in the storage 330 is erased at the time of writing the file of the memory 320 to the storage 330. The electronic device 300 may determine that the faster the file in the storage 330 is erased, the closer to a hot file that is frequently modified. By calculating the later probability instead of calculating the probability at the time of storing the file in the memory 320, it is possible to prevent a response delay when an application requests a write to the memory 320.

According to an embodiment, an equation for calculating the probability of how quickly a file is erased at the time of writing the file to the storage 330 or the probability that a file belongs to a hot file is as shown in Equation 1.

$$[\text{Equation 1}]$$
$$P = \sum WX + b$$

[P: A probability of a hot file,
X: A feature of a write pattern and consists of X1, X2, X3 ~ Xn (e.g., it may consist of X1 (write_chunk_size), X2 (append_write_count) ~ Xn (overwrite_count), but is not limited thereto), W: Weight, b: bias]
The processor 310 may calculate the probability P by identifying a write pattern for each file while periodically synchronizing the cache in the file system 325 with the storage 330, and by applying the identified write pattern to the regression equation. Here, W denotes the aforementioned weight for each feature of the write pattern. For example, in case of performing learning by using a hot file, the electronic device 300 may increase weights for the fsync count and the overwrite count. Also, in case of performing learning by using a cold file, the electronic device 300 may increase weights for the write chunk, the dirty page count, and the append count. The write chunk may denote an average file size upon a file write request, and in case of a cold file, a file size modified in response to a single write request may be relatively large because the modification is not frequent. Thus, the cold file may have a relatively high write chunk, and the electronic device 300 may increase the weight of the write chunk for the cold file after learning through the machine learning.

In addition, b (bias value) may be derived as a result of machine learning together with a weight. The artificial intelligence model may derive a classification result of a file, as a target of analysis, differently depending on a bias value even if the weight or w value is the same in Equation 1. For example, in case that the bias is more than or equal to a certain level, the artificial intelligence model may classify the same write pattern as a hot file. Also, in case that the bias is less than a certain level, the artificial intelligence model may classify the same write pattern as a cold file. In summary, the artificial intelligence model may adjust the position of the calculated W value according to b (bias value).

Also, X may denote a feature of a write pattern of an arbitrary file. The feature of the write pattern may include, for example, at least one of a file size, a file modification time, a modification interval, a dirty page count, an append write count, an overwrite count, a chunk size, a fsync count, a directory name, and a use-specific file system. Also, b may denote bias. In case of a large bias of data, a difference between a predicted value and an actual value may be large, and as the machine learning model for calculating the probability becomes simpler, the bias of the data may increase. The processor 310 may control the value of the bias such that the sum of bias and variance is minimized.

FIGS. 4 and 5 are diagrams illustrating a process of utilizing classified files in a garbage collection operation in an electronic device according to various embodiments.

The garbage collection operation may refer to an operation of freeing an unnecessary area in a memory area dynamically allocated by a program. The unnecessary area may denote an area in which a file containing information before modification is stored in case that information on the file is changed. Hereinafter, a file containing information before modification will be referred to as an invalid block 402.

According to an embodiment, the electronic device (e.g., the electronic device 300 in FIG. 3) may include a processor (e.g., the processor 310 in FIG. 3), a memory 320, and a storage 330. The memory 320 may include a file system 325. The file system 325 may refer to a system for storing or organizing files or data to be easily found or accessed in the electronic device 300. The file system 325 according to various embodiments of the disclosure may control storing and managing files and directories in the storage 330 and the memory 320.

According to an embodiment, the file system 325 may include a write pattern monitor module (e.g., the write pattern monitor module 210 in FIG. 2) and a writeback thread module (e.g., the writeback thread module 212 in FIG. 2). The write pattern monitor module 210 may detect an application's request for writing a file in the file system 325, and monitor main characteristics (e.g., a write pattern) of a write operation. The write pattern monitor module 210 may temporarily store the monitored pattern of a file in a file object (not shown) in the memory 320. The file system 325 may classify a file as a hot file 401 or a cold file 403, based on the write pattern of the file. Alternatively, the file system 325 may classify the file as a first file or a second file, based on the write pattern of the file. The first file or hot file may refer to a file whose modification and/or deletion occurs relatively frequently. The second file or cold file may refer to a file whose modification and/or deletion does not occur relatively frequently.

The processor 310 may classify an arbitrary file as the hot file 401 or the cold file 403 and may separately store it in the storage 330. Alternatively, the processor 310 may classify an arbitrary file as the hot file 401 or the cold file 403 and store it in the storage 330 by tagging a hint about the type of the file.

According to FIG. 5, the processor 310 may store file information in first to fourth spaces 510 to 540 in the storage 330. Here, the space in the storage 330 is not limited to the first space 510 to the fourth space 540, and the number of spaces may vary according to classification.

According to a comparative embodiment shown in an upper part of FIG. 5, the cold file 403 and the invalid block 402 may be stored in the first space 510. The invalid block 402 may refer to a file containing information before modification in case that the file is modified.

According to an embodiment, a file written in the memory 320 may be classified as one of the hot file 401 and the cold file 403 by an artificial intelligence model. The electronic device 300 may identify whether a file classified using the file system 325 is the latest file or the invalid block 402 containing information before modification. The electronic device 300 may identify the type of the invalid block 402 identified based on information of the file classified when the file is written in the storage 330. For example, a specific file classified as the hot file 401 when being written in the storage 330 may still be classified as the hot file 401 even if it is identified as the invalid block 402.

According to the comparative embodiment in the upper part of FIG. 5, the cold file 403 and the invalid block 402 may be stored in the first space 510 and the second space 520. In this case, the arrangement of the cold file 403 and the invalid block 402 may be different for each space. In the third space 530, a modified file among the hot files 401 may be stored. The fourth space 540 may maintain a state of a free space that does not contain any files.

According to the comparative embodiment in the upper part of FIG. 5, the processor 310 may delete the invalid block 402 for space utilization, and separately store the remaining files in other spaces depending on the file type (e.g., the hot file 401 or the cold file 403). The processor 310 may control deleting the invalid blocks 402 from the first space 510 and the second space 520, copying the remaining cold files 403 to the fourth space 540, and deleting the cold files 403 from the first space 510 and the second space 520. In this case, the first space 510 and the second space 520 may be secured as free spaces. However, in this process, the storage 330 performs a command to delete the invalid blocks 402, a command to copy and move the remaining cold files 403, and a command to delete the cold files 403 from the first space 510 and the second space 520, thereby causing the amount of disk write to be increased. In the storage 330, when the amount of disk write increases, storage performance and lifespan may decrease.

The electronic device 300 according to various embodiments of the disclosure may efficiently secure the free space without increasing the amount of disk write during such a file organizing process.

According to an embodiment shown in a lower part of FIG. 5, the processor 310 may classify a file as the hot file 401 or the cold file 403 by using a probability calculation when writing the file in the storage 330. Also, the processor 310 may control a plurality of files to be stored in different spaces, based on the types of the classified files. For example, the processor 310 may control the hot files 401 to be stored in the first space 510 and the third space 530 and the cold files 403 to be stored in the second space 520. The areas in which the hot files 401 and the cold files 403 are stored are not limited thereto, and may vary depending on at least one of a user's classification, the number of hot files 401 or the number of cold files 403.

The processor 310 may identify that a file is modified and thereby becomes the invalid block 402, and may control the invalid block 402 to be deleted. In this case, in the storage 330, the invalid block 402 may be deleted from the first space 510, and the remaining second space 520 to the fourth space 540 that do not include the invalid block 402 may not ask for a separate command. In the previous comparative embodiment, the storage 330 may have to perform a command to delete the invalid blocks 402, a command to copy and move the remaining cold files 403, and a command to delete the cold files 403 from the first space 510 and the second space 520 in the file organizing process. On the other hand, in the embodiment using the electronic device according to the disclosure, the storage 330 only needs to perform a command to delete the invalid blocks 402, so it is possible to efficiently secure a free space without increasing the amount of disk write.

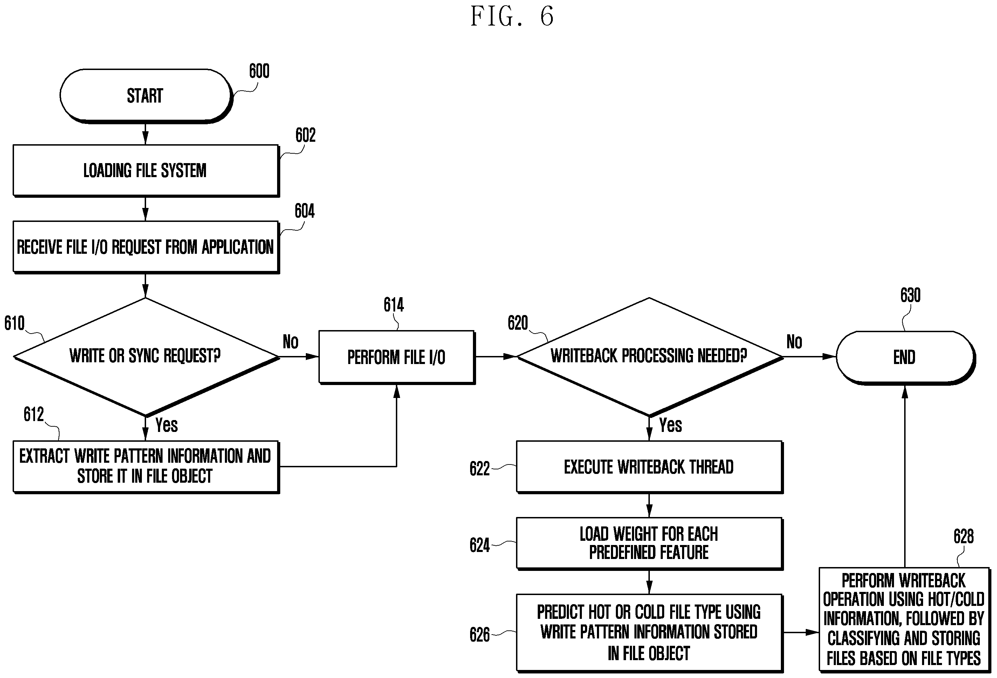

FIG. 6 is a flowchart illustrating a method of operating a file system of an electronic device according to various embodiments.

The operations described with reference to FIG. 6 may be implemented based on instructions that may be stored in a computer-readable recording medium or a memory (320 in FIG. 3).

The illustrated method 600 may be executed by the electronic device (e.g., the electronic device 300 in FIG. 3) described above with reference to FIGS. 1 to 5, and the above-described technical features will be omitted below.

A processor (e.g., the processor 310 in FIG. 3) may load a file system (e.g., the file system 325 in FIG. 3) at operation 602. Then, at operation 604, the processor 310 may receive, from an application (e.g., the application 345 in FIG. 3), an input or output request for an application-related file. The processor 310 may simultaneously receive input or output requests from a plurality of applications.

At operation 610, the processor 310 may identify whether or not the input or output request received from the application 345 is a write request or a sync request. The write request may refer to a request for storing a file of the application 345 in a memory (e.g., the memory 320 in FIG. 3). The sync request may refer to a request for updating or modifying a file in a storage (e.g., the storage 330 in FIG. 3) to match the file stored in the memory 320.

At operation 612, in response to identifying that the input or output request received from the application 345 is a write request or a sync request, the processor 310 may extract information related to a write pattern of a file and control it to be stored in a file object. The information related to the write pattern of the file may include a feature of the write pattern of the file. According to an embodiment, the feature of the write pattern of the file may include at least one of an overwrite count, an append count, a write chunk, and a system call count (fsync). In addition, the feature of the write pattern of the file may include, for example, at least one of a file size, a file modification time, a modification interval, a dirty page count, an append write count, an overwrite count, a chunk size, a fsync count, a directory name, and a use specific file system. This has been previously described in FIG. 3.

The file system operating method of the electronic device 300 according to various embodiments of the disclosure may update only information related to the write pattern of the file at the time of storing the file in the memory 320. Thereafter, at the time of sending data of the file down to the storage 330, the electronic device 300 may calculate a probability so that the type of the file can be distinguished using a writeback thread (e.g., the writeback thread 212 in FIG. 2). The electronic device 300 may prevent a response delay due to the probability calculation by adjusting the timing of the probability calculation. Here, the type of the file may include, for example, a hot file (e.g., the hot file 401 in FIG. 4) or a cold file (e.g., the cold file 403 in FIG. 4). The hot file 401 may refer to a file whose modification and/or deletion occurs relatively frequently. The cold file 403 may refer to a file whose modification and/or deletion occurs relatively infrequently.

Thereafter, at operation 614, the processor 310 may perform the input or output of a file in response to the file input or output request. In case that at the operation 610 the input or output request received from the application 345 is neither a write request nor a sync request, the processor 310 may perform the input or output of the file without separately extracting information related to the write pattern of the file.

At operation 620, the processor 310 may determine whether writeback processing is needed in the input or output of the file. The writeback may refer to an operation of updating only the cache of the memory 320, not the storage 330, when writing data of a file. That is, when writing the data of the file, the processor 120 may not write it in the storage 230 while updating only the cache and, only when necessary, may control the writing in a main memory device or in an auxiliary memory device. Although the writeback has a fast data input speed, data between the cache of the memory 320 and the storage 330 may have different values because the data is not updated directly to the storage 330. As such, a file having different values in the memory 320 and in the storage 330 may be referred to as a dirty page. Based on the existence of the dirty page, the processor 310 may determine whether processing for the writeback is necessary upon the input or output of the file.

According to an embodiment, the dirty page may denote a file whose contents are different between the memory 320 and the storage 330. In case that a file is frequently modified, the contents of the file in the memory 320 may be different from those of the file stored in the storage 330. In case of a cold file, a write operation to the storage 330 does not occur relatively frequently, and many writes may be performed at once. In this case, because of a low number of times of writes, the cold file may contain relatively many dirty pages. So, the cold file may have relatively many dirty pages, and the electronic device 300 may increase the weight of the dirty page count for the cold file after learning through the machine learning.

The processor 310 may identify the existence of the dirty page and control the writeback to be performed. At operation 622, the processor 310 may control the writeback thread 212 to be executed. The writeback thread 212 may identify a file type, based on a weight for each feature of a write pattern of the file. At operation 624, the writeback thread 212 may load a weight for each feature of a predefined write pattern.

According to an embodiment, the electronic device 300 may update a weight of a feature of a write pattern by using the machine learning. For example, in case of performing learning by using a hot file, the electronic device 300 may increase weights for the fsync count and the overwrite count. In case of performing learning by using a cold file, the electronic device 300 may increase weights for the write chunk, the dirty page count, and the append count. The write chunk may denote an average file size upon a file write request, and in case of a cold file, a file size modified in response to a single write request may be relatively large because the modification is not frequent. Thus, the cold file may have a relatively high write chunk, and the electronic device 300 may increase the weight of the write chunk for the cold file after learning through the machine learning. This has been previously described in FIG. 3.

At operation 626, the processor 310 may predict the type of the file by using the writeback thread 212.

According to an embodiment, in case that the fsync is relatively low, the processor 310 may determine that a file recorded in the memory 320 is a file with a relatively small number of times being written to the storage 330. That is, in case that the fsync is relatively low, the processor 310 may determine that the file is not frequently modified, and classify it as close to a cold file. Conversely, in case that the fsync is relatively high, the processor 310 may determine that the file is modified relatively frequently, and classify it as close to a hot file.

Or, in case that the write chunk is relatively small, the processor 310 may determine that a small amount of write is performed during one write operation, and classify it as close to a hot file. Conversely, in case that the write chunk is relatively large, the processor 310 may determine that a large amount of write is performed during one write operation, and classify it as close to a cold file. This has been previously described in FIG. 3.

At operation 628, the processor 310 may perform a writeback processing operation in response to identifying the file types, and control classifying the files according to the file types and separately storing the files in a first area (e.g., the first area 331 in FIG. 3) and a second area (e.g., the second area 332 in FIG. 3).

For example, in case that an arbitrary file can be classified as the hot file 401, the processor 310 may identify whether file information in the memory 320 and file information in the storage 330 do not match each other due to frequent modification. In response to identifying that the file information in the memory 320 and the file information in the storage 330 do not match, the processor 310 may control an invalid block (e.g., the invalid block 402 in FIG. 4) stored in the storage 330 to be deleted. The invalid block 402 may refer to a file in the storage 330 containing information before modification in a situation where the file information in the memory 320 and the file information in the storage 330 do not match. The processor 310 may perform a garbage collection operation that deletes the invalid block 402 and secures a free space. This has been previously described with reference to FIGS. 4 and 5.

At operation 630, the processor 310 may terminate the processes shown in FIG. 6 when the classification according to the file types is completed or the file writeback processing is not required.

According to various embodiments, an electronic device may include a random access memory, a storage, and a processor. The processor may be configured to write a file of an application in the memory in response to a file input request of the application, to monitor a write pattern of the file at a first time of writing the file of the application in the memory, followed by updating the write pattern in the memory, to classify the file as one of a hot file and a cold file based on the write pattern of the file at a second time of copying the file written in the memory to the storage, and to control storing a classification result of the file together with the file in the storage or storing the file in a first area or a second area of the storage based on the classification result of the file. The hot file is a file whose modification and/or deletion occurs frequently compared to the cold file, and the cold file is a file whose modification and/or deletion occurs infrequently compared to the hot file. The write pattern may include a degree of modification of the file.

According to an embodiment, the write pattern may include at least one of a file size, a dirty page, a file modification time, a file modification interval, a system call count (fsync), a chunk size, a file name extension, a directory name of the file stored, and a use specific file system.

According to an embodiment, the processor may be configured to control learning the write pattern for each file by using machine learning, to assign a weight to at least one of features of the write pattern for the hot file based on a learning result, and to assign a weight to at least one of features of the write pattern for the cold file based on the learning result.

According to an embodiment, the processor may be configured to store the weights learned using the machine learning in the memory, and to control classifying an arbitrary file written in the memory as the hot file or the cold file based on the weights learned using the machine learning at the second time of copying the arbitrary file to the storage.

According to an embodiment, the processor may be configured to, in response to identifying that the file learned using the machine learning is classified as the hot file, control increasing the weight of at least one of, in the write pattern, an overwrite count which denotes the number of times to modify a part of a file in a middle, or an fsync which denotes the number of times to write a file recorded in the memory to the storage.

According to an embodiment, the processor may be configured to, in response to identifying that the file learned using the machine learning is classified as the cold file, control increasing the weight of at least one of a write chunk which denotes a size unit of a file stored in an operation of writing the file in the memory, or a dirty page count which denotes the number of dirty pages whose contents are differently stored in the memory and in the storage.

According to an embodiment, the write pattern may include an overwrite count that denotes the number of times to modify a part of a file in a middle, and the processor may be configured to, in case that the overwrite count of the file is relatively large, classify the file as close to the hot file based on determining that the number of times of modifications of the file is large, and in case that the overwrite count of the file is relatively small, classify the file as close to the cold file based on determining that the number of times of modifications of the file is small.

According to an embodiment, the write pattern may include a write chunk which denotes a size unit of a file stored in an operation of writing the file in the memory, and the processor may be configured to, in case that the write chunk of the file is relatively small, classify the file as close to the hot file based on determining that there is frequent modification, and in case that the write chunk of the file is relatively large, classify the file as close to the cold file based on determining that a large amount of write is performed during one write operation.

According to an embodiment, the write pattern may include an fsync which denotes the number of times to write a file written in the memory to the storage, and the processor may be configured to, in case that the fsync of the file is relatively high, classify the file as close to the hot file based on determining as a file with relatively frequent modification, and in case that the fsync of the file is relatively low, classify the file as close to the cold file based on determining as a file with infrequent modification.

According to an embodiment, the processor may be configured to control the hot file to be stored in the first area, and to control the cold file to be stored in the second area.

According to various embodiments, a file system operating method of an electronic device may include writing a file of an application in a memory in response to a file input request of the application, monitoring a write pattern of the file at a first time of writing the file of the application in the memory, followed by updating the write pattern in the memory, classifying the file as a hot file or a cold file based on the write pattern of the file at a second time of copying the file written in the memory to a storage, and storing a classification result of the file together with the file in the storage or storing the file in a first area or a second area of the storage based on the classification result of the file. The hot file is a file whose modification and/or deletion occurs frequently compared to the cold file, and the cold file is a file whose modification and/or deletion occurs infrequently compared to the hot file. The write pattern may include a degree of modification of the file.

According to an embodiment, the write pattern may include at least one of a file size, a dirty page, a file modification time, a file modification interval, a system call count (fsync), a chunk size, a file name extension, a directory name of the file stored, and a use specific file system.

According to an embodiment, monitoring a write pattern of the file at a first time of writing the file of the application in the memory, followed by updating the write pattern in the memory, may include controlling learning the write pattern for each file by using machine learning, and assigning a weight to at least one of features of the write pattern for the hot file and the cold file based on a learning result.

According to an embodiment, classifying the file as a hot file or a cold file based on the write pattern of the file at a second time of copying the file written in the memory to a storage may include storing the weights learned using the machine learning in the memory, and classifying an arbitrary file written in the memory as the hot file or the cold file based on the weights learned using the machine learning at the second time of copying the arbitrary file to the storage.

According to an embodiment, the method may further include, in response to identifying that the file learned using the machine learning is classified as the hot file, controlling increasing the weight of at least one of, in the write pattern, an overwrite count which denotes the number of times to modify a part of a file in a middle, or an fsync which denotes the number of times to write a file recorded in the memory to the storage.

According to an embodiment, the method may further include, in response to identifying that the file learned using the machine learning is classified as the cold file, controlling increasing the weight of at least one of a write chunk which denotes a size unit of a file stored in an operation of writing the file in the memory, or a dirty page count which denotes the number of dirty pages whose contents are differently stored in the memory and in the storage.

According to an embodiment, the write pattern may include an overwrite count that denotes the number of times to modify a part of a file in a middle, and classifying the file as a hot file or a cold file based on the write pattern of the file at a second time of copying the file written in the memory to a storage may include, in case that the overwrite count of the file is relatively large, classifying the file as close to the hot file based on determining that the number of times of modifications of the file is large, and in case that the overwrite count of the file is relatively small, classifying the file as close to the cold file based on determining that the number of times of modifications of the file is small.

According to an embodiment, the write pattern may include a write chunk which denotes a size unit of a file stored in an operation of writing the file in the memory, and classifying the file as a hot file or a cold file based on the write pattern of the file at a second time of copying the file written in the memory to a storage may include, in case that the write chunk of the file is relatively small, classifying the file as close to the hot file based on determining that there is frequent modification, and in case that the write chunk of the file is relatively large, classifying the file as close to the cold file based on determining that a large amount of write is performed during one write operation.

According to an embodiment, the write pattern may include an fsync which denotes the number of times to write a file written in the memory to the storage, and classifying the file as a hot file or a cold file based on the write pattern of the file at a second time of copying the file written in the memory to a storage may include, in case that the fsync of the file is relatively high, classifying the file as close to the hot file based on determining as a file with relatively frequent modification, and in case that the fsync of the file is relatively low, classifying the file as close to the cold file based on determining as a file with infrequent modification.

According to an embodiment, storing a classification result of the file together with the file in the storage or storing the file in a first area or a second area of the storage based on the classification result of the file may include controlling the hot file to be stored in the first area, and controlling the cold file to be stored in the second area.

The embodiments disclosed in the specification and drawings are merely provided for specific examples in order to easily explain the technical contents according to the embodiments of the disclosure and to help the understanding of the embodiments of the disclosure.

**Claims**

1. An electronic device (300) comprising:

   a memory (320);
   a storage (330); and
   a processor (310) configured to:

   write a file of an application in the memory (320) in response to a file input request of the application;
   identify a write pattern of the file at a first time of writing the file of the application in the memory (320);
   update the write pattern in the memory (320);
   classify the file as one of a hot file and a cold file based on the write pattern of the file at a second time of copying the file of the application from the memory (320) to the storage (330); the electronic device being **characterized in that** the processor is configured to :

   store a classification result of the file together with the file in the storage (330); or
   store the file in one of a first area (331) of the storage and a second area (332) of the storage based on the classification result of the file,

   wherein the file is classified as a hot file based on at least one modification and/or deletion in the file occurring more frequently than a predetermined frequency, and the file is classified as a cold file based on at least one modification and/or deletion in the file occurring less frequently than the predetermined frequency, and
   wherein the write pattern comprises a degree of modification of the file,
   wherein the processor (310) is further configured to:

   control learning the write pattern for each file by using machine learning;
   assign a weight to at least one feature of the write pattern for the hot file based on a learning result; and
   assign a weight to at least one feature of the write pattern for the cold file based on the learning result.

2. The electronic device (300) of claim 1, wherein the write pattern further comprises at least one of a file size, a dirty page, a file modification time, a file modification interval, a chunk size, a file name extension, a directory name of the file stored, and a use-specific file system.

3. The electronic device (300) of claim 1, wherein the processor (310) is further configured to:

   store the weight learned using the machine learning in the memory (320); and
   control classifying an arbitrary file written in the memory (320) as the hot file or the cold file based on the weight learned using the machine learning at the second time of copying the arbitrary file to the storage (330).

4. The electronic device (300) of claim 1, wherein the processor (310) is further configured to:

   in response to identifying that the file learned using the machine learning is classified as the hot file,
   control increasing the weight of at least one of, in the write pattern, an overwrite count which denotes the number of times to modify a part of a file in a middle, and an fsync which denotes the number of times to write a file recorded in the memory (320) to the storage (330).

5. The electronic device (300) of claim 1, wherein the processor (310) is further configured to:

   in response to identifying that the file learned using the machine learning is classified as the cold file,
   control increasing the weight of at least one of a write chunk which denotes a size unit of a file stored in an operation of writing the file in the memory (320), and a dirty page count which denotes a number of dirty pages whose contents are differently stored in the memory (320) and in the storage (330).

6. The electronic device (300) of claim 1, wherein the write pattern includes the overwrite count that denotes the number of times to modify a part of a file in a middle, and
   wherein the processor (310) is further configured to:

   in a case in which the overwrite count of the file is greater than a predetermined overwrite count, classify the file as close to the hot file based on determining that a number of modifications of the file is greater than a predetermined number of modifications, and
in a case in which the overwrite count of the file is less than the predetermined overwrite count, classify the file as close to the cold file based on determining that the number of modifications of the file is less than the predetermined number of modifications.

7. The electronic device (300) of claim 1, wherein the write pattern includes the write chunk which denotes a size unit of a file stored in an operation of writing the file in the memory (320), and
   wherein the processor (310) is further configured to:

   in a case in which the write chunk of the file is less than a predetermined write chunk, classify the file as close to the hot file based on determining that there is frequent modification; and
   in a case in which the write chunk of the file is greater than the predetermined write chunk, classify the file as close to the cold file based on determining that a large amount of write is performed during a write operation.

8. The electronic device (300) of claim 1, wherein the write pattern includes the fsync which denotes the number of times to write a file written in the memory (320) to the storage (330), and
   wherein the processor (310) is further configured to:

   in a case in which the fsync of the file is greater than a predetermined fsync, classify the file as close to the hot file based on determining the file as a file with frequent modification; and
   in a case in which the fsync of the file is less than the predetermined fsync, classify the file as close to the cold file based on determining the file as a file with infrequent modification.

9. The electronic device (300) of claim 1, wherein the processor is further configured to:

   control the hot file to be stored in the first area (331), and
   control the cold file to be stored in the second area (332).

10. A method of operating a file system of an electronic device (300), the method comprising:

   writing a file of an application in a memory (320) in response to a file input request of the application;
   identifying a write pattern of the file at a first time of writing the file of the application in the memory (320);
   classifying the file as a hot file or a cold file based on the write pattern of the file at a second time of copying the file of the application from the memory (320) to a storage (330);

storing a classification result of the file together with the file in the storage (330), or storing the file in one of a first area (331) of the storage and a second area (332) of the storage based on the classification result of the file,

controlling learning the write pattern for each file by using machine learning; and

assigning a weight to at least one feature of the write pattern for the hot file and the cold file based on a learning result,

wherein the file is classified as a hot file based on at least one modification and/or deletion in the file occurring more than a predetermined frequency, and the file is classified as a cold file based on at least one modification and/or deletion in the file occurring less frequently than the predetermined frequency, and

wherein the write pattern comprises a degree of modification of the file.

11. The method of claim 10, wherein the write pattern further comprises at least one of a file size, a dirty page, a file modification time, a file modification interval, a chunk size, a file name extension, a directory name of the file stored, and a use-specific file system.

12. The method of claim 10, wherein classifying the file as a hot file or a cold file based on the write pattern of the file at a second time of copying the file written in the memory (320) to a storage (330) comprises:

storing the weight learned using the machine learning in the memory; and

classifying an arbitrary file written in the memory (320) as the hot file or the cold file based on the weight learned using the machine learning at the second time of copying the arbitrary file to the storage (330).

13. The method of claim 10, further comprising:

in response to identifying that the file learned using the machine learning is classified as the hot file,

controlling increasing the weight of at least one of, in the write pattern, an overwrite count which denotes the number of times to modify a part of a file in a middle, and an fsync which denotes the number of times to write a file recorded in the memory (320) to the storage (330).

**Patentansprüche**

1. Elektronische Vorrichtung (300), umfassend:

einen Arbeitsspeicher (320);
ein Datenspeicher (330); und
einen Prozessor (310), der zu Folgendem konfiguriert ist:

Schreiben einer Datei einer Anwendung in den Arbeitsspeicher (320) als Reaktion auf eine Dateieingabeanforderung der Anwendung;

Identifizieren eines Schreibmusters der Datei zu einem ersten Zeitpunks des Schreibens der Datei der Anwendung in den Arbeitsspeicher (320);

Aktualisieren des Schreibmusters in dem Arbeitsspeicher (320);

Klassifizieren der Datei als eine von einer heißen Datei und einer kalten Datei auf Grundlage des Schreibmusters der Datei zu einem zweiten Zeitpunkt eines Kopierens der Datei der Anwendung aus dem Arbeitsspeicher (320) in den Datenspeicher (330); wobei die elektronische Vorrichtung **dadurch gekennzeichnet ist, dass** der Prozessor zu Folgendem konfiguriert ist:

Speichern eines Klassifizierungsergebnisses der Datei zusammen mit der Datei in dem Datenspeicher (330); oder

Speichern der Datei in einem ersten Bereich (331) des Datenspeichers oder einem zweiten Bereich (332) des Datenspeichers auf Grundlage des Klassifizierungsergebnisses der Datei,

wobei die Datei auf Grundlage von mindestens einer Modifikation und/oder Löschung in der Datei, die mit einer größeren Häufigkeit auftritt als eine vorbestimmte Häufigkeit, als heiße Datei klassifiziert wird und die Datei auf Grundlage von mindestens einer Modifikation und/oder Löschung in der Datei, die mit einer geringeren Häufigkeit auftritt als die vorbestimmte Häufigkeit, als heiße Datei klassifiziert wird und wobei das Schreibmuster einen Modifizierungsgrad der Datei umfasst, wobei der Prozessor (310) ferner zu Folgendem konfiguriert ist:

Steuern des Lernens des Schreibmusters für jede Datei unter Verwendung von maschinellem Lernen;

Zuweisen einer Gewichtung zu mindestens einem Merkmal des Schreibmusters für die heiße Datei auf Grundlage eines Lernergebnisses; und
Zuweisen einer Gewichtung zu mindestens einem Merkmal des Schreibmusters für die kalte Datei auf Grundlage des Lernergebnisses.

2. Elektronische Vorrichtung (300) nach Anspruch 1, wobei das Schreibmuster ferner mindestens eines von einer Dateigröße, einer Dirty Page, einem Dateimodifizierungszeitpunkt, einem Dateimodifizierungsintervall, einer Blockgröße, einer Dateibezeichnungserweiterung, einer Verzeichnisbezeichnung der gespeicherten Datei und einem nutzungsspezifischen Dateisystem umfasst.

3. Elektronische Vorrichtung (300) nach Anspruch 1, wobei der Prozessor (310) ferner zu Folgendem konfiguriert ist:

   Speichern des unter Verwendung der maschinellen Lernens erlernten Gewichtung in dem Arbeitsspeicher (320); und
   Steuern des Klassifizierens einer beliebigen Datei, die in den Arbeitsspeicher (320) geschrieben wird, als die heiße Datei oder die kalte Datei auf Grundlage der Gewichtung, die unter Verwendung des maschinellen Lernens zu dem zweiten Zeitpunkt eines Kopierens der beliebigen Datei in den Datenspeicher (330) gelernt wurde.

4. Elektronische Vorrichtung (300) nach Anspruch 1, wobei der Prozessor (310) ferner zu Folgendem konfiguriert ist:

   als Reaktion auf das Identifizieren, dass die unter Verwendung des maschinellen Lernens gelernte Datei als die heiße Datei klassifiziert wurde,
   Steuern des Erhöhens der Gewichtung von mindestens einem von einer Überschreibungszahl, welche die Anzahl an Malen angibt, die ein Teil einer Datei in einer Mitte zu modifizieren ist, und einer fsync, welche die Anzahl an Malen angibt, die eine in dem Arbeitsspeicher (320) aufgezeichnete Datei in den Datenspeicher (330) zu schreiben ist, in dem Schreibmuster.

5. Elektronische Vorrichtung (300) nach Anspruch 1, wobei der Prozessor (310) ferner zu Folgendem konfiguriert ist:

   als Reaktion auf das Identifizieren, dass die unter Verwendung des maschinellen Lernens gelernte Datei als die kalte Datei klassifiziert wurde,
   Steuern des Erhöhens der Gewichtung von mindestens einem von einem Schreibblock, der eine Größeneinheit einer Datei bezeichnet, die in einem Vorgang des Schreibens der Datei in den Arbeitsspeicher (320) gespeichert wird, und einer Dirty-Pages-Zahl, die eine Anzahl an Dirty Pages bezeichnet, deren Inhalt unterschiedlich in dem Arbeitsspeicher (320) und in dem Datenspeicher (330) gespeichert wird.

6. Elektronische Vorrichtung (300) nach Anspruch 1, wobei das Schreibmuster die Überschreibungszahl beinhaltet, welche die Anzahl von Malen angibt, die ein Teil einer Datei in einer Mitte zu modifizieren ist, und
   wobei der Prozessor (310) ferner zu Folgendem konfiguriert ist:

   in einem Fall, in dem die Überschreibungszahl der Datei größer als eine vorbestimmte Überschreibungszahl ist, Klassifizieren der Datei als nahe an der heißen Datei auf Grundlage eines Bestimmens, dass eine Anzahl von Modifikationen der Datei größer als eine vorbestimmte Anzahl von Modifikationen ist, und
   in einem Fall, in dem die Überschreibungszahl der Datei kleiner als die vorbestimmte Überschreibungszahl ist, Klassifizieren der Datei als nahe an der kalten Datei auf Grundlage eines Bestimmens, dass die Anzahl von Modifikationen der Datei kleiner als die vorbestimmte Anzahl von Modifikationen ist.

7. Elektronische Vorrichtung (300) nach Anspruch 1, wobei das Schreibmuster den Schreibblock beinhaltet, der eine Größeneinheit einer Datei bezeichnet, die in einem Vorgang des Schreibens der Datei in den Arbeitsspeicher (320) gespeichert ist, und
   wobei der Prozessor (310) ferner zu Folgendem konfiguriert ist:

   in einem Fall, in dem der Schreibblock der Datei kleiner als ein vorbestimmter Schreibblock ist, Klassifizieren der Datei als nahe an der heißen Datei auf Grundlage eine Bestimmens, dass eine häufige Modifikation vorliegt; und
   in einem Fall, in dem der Schreibblock der Datei größer als der vorbestimmte Schreibblock ist, Klassifizieren der Datei als nahe an der kalten Datei auf Grundlage eines Bestimmens, dass eine große Menge an Schreiben während eines Schreibvorgangs durchgeführt wird.

8. Elektronische Vorrichtung (300) nach Anspruch 1, wobei das Schreibmuster die fsync beinhaltet, welche die Anzahl an Malen angibt, mit der eine in den Arbeitsspeicher (320) geschriebene Datei in den Datenspeicher (330) geschrieben wird, und
   wobei der Prozessor (310) ferner zu Folgendem konfiguriert ist:

in einem Fall, in dem die fsync der Datei größer als eine vorbestimmte fsync ist, Klassifizieren der Datei als nahe an der heißen Datei auf Grundlage eines Bestimmens der Datei als eine Datei mit häufiger Modifikation; und
in einem Fall, in dem die fsync der Datei kleiner als die vorbestimmte fsync ist, Klassifizieren der Datei als nahe an der kalten Datei auf Grundlage eines Bestimmens der Datei als Datei mit nicht häufiger Modifikation.

9. Elektronische Vorrichtung (300) nach Anspruch 1, wobei der Prozessor ferner zu Folgendem konfiguriert ist:

Steuern der heißen Datei, die in dem ersten Bereich (331) zu speichern ist, und
Steuern der kalten Datei, die in dem zweiten Bereich (332) zu speichern ist.

10. Verfahren zum Betrieb eines Dateisystems einer elektronischen Vorrichtung (300), wobei das Verfahren Folgendes umfasst:

Schreiben einer Datei einer Anwendung in einen Arbeitsspeicher (320) als Reaktion auf eine Dateieingabeanforderung der Anwendung;
Identifizieren eines Schreibmusters der Datei zu einem ersten Zeitpunkt des Schreibens der Datei der Anwendung in den Arbeitsspeicher (320);
Klassifizieren der Datei als heiße Datei oder kalte Datei auf Grundlage des Schreibmusters der Datei zu einem zweiten Zeitpunkt eines Kopierens der Datei der Anwendung aus dem Arbeitsspeicher (320) in einen Datenspeicher (330);
Speichern eines Klassifizierungsergebnisses der Datei zusammen mit der Datei in dem Datenspeicher (330) oder Speichern der Datei in einem von einem ersten Bereich (331) des Datenspeichers und einem zweiten Bereich (332) des Datenspeichers auf Grundlage des Klassifizierungsergebnisses der Datei,
Steuern des Lernens des Schreibmusters für jede Datei unter Verwendung von maschinellem Lernen; und
Zuweisen einer Gewichtung zu mindestens einem Merkmal des Schreibmusters für die heiße Datei und die kalte Datei auf Grundlage eines Lernergebnisses,
wobei die Datei auf Grundlage von mindestens einer Modifikation und/oder Löschung in der Datei, die häufiger auftritt als eine vorbestimmte Häufigkeit, als heiße Datei klassifiziert wird und die Datei auf Grundlage von mindestens einer Modifikation und/oder Löschung in der Datei, die mit einer geringeren Häufigkeit auftritt als die vorbestimmte Häufigkeit, als heiße Datei klassifiziert wird und
wobei das Schreibmuster einen Modifikationsgrad der Datei umfasst.

11. Verfahren nach Anspruch 10, wobei das Schreibmuster ferner mindestens eines von einer Dateigröße, einer Dirty Page, einem Dateimodifizierungszeitpunkt, einem Dateimodifizierungsintervall, einer Blockgröße, einer Dateibezeichnungserweiterung, einer Verzeichnisbezeichnung der gespeicherten Datei und einem nutzungsspezifischen Dateisystem umfasst.

12. Verfahren nach Anspruch 10, wobei das Klassifizieren der Datei als heiße Datei oder kalte Datei auf Grundlage des Schreibmusters der Datei zu einem zweiten Zeitpunkt eines Kopierens der in den Arbeitsspeicher (320) geschriebenen Datei in einen Datenspeicher (330) Folgendes umfasst:

Speichern der unter Verwendung des maschinellen Lernens erlernten Gewichtung in dem Arbeitsspeicher; und
Klassifizieren einer beliebigen Datei, die in den Arbeitsspeicher (320) geschrieben wird, als die heiße Datei oder die kalte Datei auf Grundlage der Gewichtung, die unter Verwendung des maschinellen Lernens zu dem zweiten Zeitpunkt eines Kopierens der beliebigen Datei in den Datenspeicher (330) gelernt wurde.

13. Verfahren nach Anspruch 10, ferner umfassend:

als Reaktion auf das Identifizieren, dass die unter Verwendung des maschinellen Lernens gelernte Datei als die heiße Datei klassifiziert wurde,
Steuern des Erhöhens der Gewichtung von mindestens einem von einer Überschreibungszahl, welche die Anzahl an Malen angibt, die ein Teil einer Datei in einer Mitte zu modifizieren ist, und einer fsync, welche die Anzahl an Malen angibt, die eine in dem Arbeitsspeicher (320) aufgezeichnete Datei in den Datenspeicher (330) zu schreiben ist, in dem Schreibmuster.

**Revendications**

1. Dispositif électronique (300) comprenant :

une mémoire (320) ;
un dispositif de stockage (330) ; et
un processeur (310) configuré pour :

écrire un fichier d'une application dans la mémoire (320) en réponse à une demande d'entrée de fichier de l'application ;

identifier un motif d'écriture du fichier à un premier instant d'écriture du fichier de l'application dans la mémoire (320) ;

mettre à jour le motif d'écriture dans la mémoire (320) ;

classer le fichier comme l'un d'un fichier chaud et d'un fichier froid sur la base du motif d'écriture du fichier à un second instant de copie du fichier de l'application à partir de la mémoire (320) sur le dispositif de stockage (330) ; le dispositif électronique étant **caractérisé en ce que** le processeur est configuré pour :

> stocker un résultat de classification du fichier ensemble avec le fichier dans le dispositif de stockage (330) ; ou stocker le fichier dans l'une d'une première zone (331) du dispositif de stockage et d'une seconde zone (332) du dispositif de stockage sur la base du résultat de classification du fichier, ledit fichier étant classé en tant que fichier chaud sur la base d'au moins une modification et/ou suppression dans le fichier se produisant plus fréquemment qu'une fréquence prédéfinie, et ledit fichier étant classé en tant que fichier froid sur la base d'au moins une modification et/ou suppression dans le fichier se produisant moins fréquemment que la fréquence prédéfinie, et
>
> ledit motif d'écriture comprenant un degré de modification du fichier, ledit processeur (310) étant en outre configuré pour :
>
>> commander l'apprentissage du motif d'écriture pour chaque fichier à l'aide de l'apprentissage automatique ;
>> attribuer un poids à au moins une caractéristique du motif d'écriture pour le fichier chaud sur la base d'un résultat d'apprentissage ; et attribuer un poids à au moins une caractéristique du motif d'écriture pour le fichier froid sur la base d'un résultat d'apprentissage.

**2.** Dispositif électronique (300) de la revendication 1, ledit motif d'écriture comprenant en outre au moins l'un d'une taille de fichier, d'une page sale, d'un temps de modification de fichier, d'un intervalle de modification de fichier, d'une taille de segment, d'une extension de nom de fichier, d'un nom de répertoire du fichier stocké et d'un système de fichiers spécifique à l'utilisation.

**3.** Dispositif électronique (300) de la revendication 1, ledit processeur (310) étant en outre configuré pour :

> stocker le poids appris à l'aide de l'apprentissage automatique dans la mémoire (320) ; et commander la classification d'un fichier arbitraire écrit dans la mémoire (320) en tant que fichier chaud ou fichier froid sur la base du poids appris à l'aide de l'apprentissage automatique au second instant de copie du fichier arbitraire sur la dispositif de stockage (330).

**4.** Dispositif électronique (300) de la revendication 1, ledit processeur (310) étant en outre configuré pour :

> en réponse à l'identification que le fichier appris à l'aide de l'apprentissage automatique est classé en tant que fichier chaud, commander l'augmentation du poids d'au moins un, dans le motif d'écriture, parmi un compte d'écrasement qui indique le nombre de fois qu'une partie d'un fichier a été modifié dans un milieu, et une fsync qui indique le nombre de fois qu'un fichier enregistré dans la mémoire (320) a été écrit dans le dispositif de stockage (330).

**5.** Dispositif électronique (300) de la revendication 1, ledit processeur (310) étant en outre configuré pour :

> en réponse à l'identification que le fichier appris à l'aide de l'apprentissage automatique est classé en tant que fichier froid, commander l'augmentation du poids d'au moins l'un d'un segment qui désigne une unité de taille d'un fichier stocké dans une opération d'écriture du fichier dans la mémoire (320), et d'un nombre de pages sales qui désigne un nombre de pages sales dont le contenu est stocké différemment dans la mémoire (320) et dans le dispositif de stockage (330).

**6.** Dispositif électronique (300) de la revendication 1, ledit motif d'écriture comprenant le compte d'écrasement qui indique le nombre de fois qu'une partie d'un fichier a été modifiée dans un milieu, et ledit processeur (310) étant en outre configuré pour :

> dans le cas où le nombre d'écrasements du fichier est supérieur à un nombre d'écrasements prédéfini, classer le fichier comme étant proche du fichier chaud en déterminant qu'un nombre de modifications du fichier est supérieur à un nombre prédéfini de modifications, et

dans le cas où le nombre d'écrasements du fichier est inférieur au nombre d'écrasements prédéfini, classer le fichier comme étant proche du fichier froid sur la base de la détermination que le nombre de modifications du fichier est inférieur au nombre prédéfini de modifications.

7. Dispositif électronique (300) de la revendication 1, ledit motif d'écriture comprenant le segment qui désigne une unité de taille d'un fichier stocké dans une opération d'écriture du fichier dans la mémoire (320), et
ledit processeur (310) étant en outre configuré pour :

dans le cas où le segment du fichier est inférieur à un segment d'écriture prédéfini, classer le fichier comme étant proche du fichier chaud sur la base de la détermination que de fréquentes modifications sont effectuées ; et
dans le cas où le segment d'écriture du fichier est supérieur au segment d'écriture prédéfini, classer le fichier comme étant proche du fichier froid sur la base de la détermination qu'une grande quantité d'écriture est effectuée durant une opération d'écriture.

8. Dispositif électronique (300) de la revendication 1, ledit motif d'écriture comprenant la fsync qui indique le nombre de fois qu'un fichier écrit dans la mémoire (320) a été écrit dans le dispositif de stockage (330), et
ledit processeur (310) étant en outre configuré pour :

dans le cas où la fsync du fichier est supérieure à une fsync prédéfinie, classer le fichier comme étant proche du fichier chaud sur la base de la détermination du fichier en tant que fichier avec de fréquentes modifications ; et
dans le cas où la fsync du fichier est inférieure à la fsync prédéfinie, classer le fichier comme étant proche du fichier froid sur la base de la détermination du fichier en tant que fichier avec des modifications peu fréquentes.

9. Dispositif électronique (300) de la revendication 1, ledit processeur étant en outre configuré pour :

commander le stockage du fichier chaud dans la première zone (331), et
commander le stockage du fichier froid dans la seconde zone (332).

10. Procédé d'exploitation d'un système de fichiers d'un dispositif électronique (300), le procédé comprenant :

l'écriture d'un fichier d'une application dans une mémoire (320) en réponse à une demande d'entrée de fichier de l'application ;
l'identification d'un motif d'écriture du fichier à un premier instant d'écriture du fichier de l'application dans la mémoire (320) ;
la classification du fichier en tant que fichier chaud ou fichier froid sur la base du motif d'écriture du fichier à un second instant de copie du fichier de l'application à partir de la mémoire (320) dans un dispositif de stockage (330) ;
le stockage d'un résultat de classification du fichier ensemble avec le fichier dans le dispositif de stockage (330), ou le stockage du fichier dans l'une d'une première zone (331) du dispositif de stockage et d'une seconde zone (332) du dispositif de stockage sur la base du résultat de classification du fichier,
la commande de l'apprentissage du motif d'écriture pour chaque fichier à l'aide de l'apprentissage automatique ; et
l'attribution d'un poids à au moins une caractéristique du motif d'écriture pour le fichier chaud et le fichier froid sur la base d'un résultat d'apprentissage,
ledit fichier étant classé en tant que fichier chaud sur la base d'au moins une modification et/ou suppression dans le fichier se produisant plus fréquemment qu'une fréquence prédéfinie, et ledit fichier étant classé en tant que fichier froid sur la base d'au moins une modification et/ou suppression dans le fichier se produisant moins fréquemment que la fréquence prédéfinie, et ledit motif d'écriture comprenant un degré de modification du fichier.

11. Procédé de la revendication 10, ledit motif d'écriture comprenant en outre au moins l'un d'une taille de fichier, d'une page sale, d'un temps de modification de fichier, d'un intervalle de modification de fichier, d'une taille de segment, d'une extension de nom de fichier, d'un nom de répertoire du fichier stocké et d'un système de fichiers spécifique à l'utilisation.

12. Procédé de la revendication 10, ladite classification du fichier en tant que fichier chaud ou fichier froid sur la base du motif d'écriture du fichier à un second instant de copie du fichier écrit dans la mémoire (320) sur un dispositif de stockage (330) comprenant :

le stockage du poids appris à l'aide de l'apprentissage automatique dans la mémoire ; et
la classification d'un fichier arbitraire écrit dans la mémoire (320) en tant que fichier chaud ou fichier froid sur la base du poids appris à l'aide de l'apprentissage automatique au second instant de copie du fichier arbitraire sur le dispositif de stockage (330).

**13.** Procédé de la revendication 10, comprenant en outre :

en réponse à l'identification que le fichier appris à l'aide de l'apprentissage automatique est classé en tant que fichier chaud,
la commande de l'augmentation du poids d'au moins un, dans le motif d'écriture, parmi un compte d'écrasement qui indique le nombre de fois qu'une partie d'un fichier a été modifiée dans un milieu, et une fsync qui indique le nombre de fois qu'un fichier enregistré dans la mémoire (320) a été écrit sur le dispositif de stockage (330).

# FIG. 1

ELECTRONIC DEVICE — 101

- INPUT MODULE — 150
- SOUND OUTPUT MODULE — 155
- BATTERY — 189
- POWER MANAGEMENT MODULE — 188
- AUDIO MODULE — 170
- HAPTIC MODULE — 179
- DISPLAY MODULE — 160

MEMORY — 130
- VOLATILE MEMORY — 132
- NON-VOLATILE MEMORY — 134
  - INTERNAL MEMORY — 136
  - EXTERNAL MEMORY — 138

PROCESSOR — 120
- MAIN PROCESSOR — 121
- AUXILIARY PROCESSOR — 123

SENSOR MODULE — 176

CAMERA MODULE — 180

COMMUNICATION MODULE — 190
- WIRELESS COMMUNICATION MODULE — 192
- WIRED COMMUNICATION MODULE — 194

SUBSCRIBER IDENTIFICATION MODULE — 196

ANTENNA MODULE — 197

INTERFACE — 177

CONNECTION TERMINAL — 178

PROGRAM — 140
- APPLICATION — 146
- MIDDLE WARE — 144
- OPERATING SYSTEM — 142

100

SECOND NETWORK — 199

ELECTRONIC DEVICE — 104

FIRST NETWORK — 198

ELECTRONIC DEVICE — 102

SERVER — 108

EP 4 394 617 B1

FIG. 2A

MEMORY (220)

App 1    App 2

file writes

FILE SYSTEM (225)

Pre-defined rules — 201

file

page cache

Writeback thread — 203

STORAGE (230)

hot    cold

⊘ : hot    ⊙ : cold

EP 4 394 617 B1

## FIG. 2B

MEMORY (220)

App 1

App 2

file writes

FILE SYSTEM (225)

I/O pattern monitoring — 210

file

page cache

203 — (2) Writeback thread

HOT/COLD PREDICTION MODULE — 212

hot

cold

STORAGE (230)

1ST AREA

2ND AREA

231

232

EP 4 394 617 B1

# FIG. 3

300

## ELECTRONIC DEVICE

310 — PROCESSOR

MEMORY

FILE SYSTEM

325

320

STORAGE

1ST AREA

2ND AREA

330

331

332

FIG. 4

FIG. 5A

510 1ST SPACE     520 2ND SPACE     530 3RD SPACE     540 4TH SPACE

BEFORE PERFORMING GARBAGE COLLECTION

510 1ST SPACE     520 2ND SPACE     530 3RD SPACE     540 4TH SPACE

free     free

AFTER PERFORMING GARBAGE COLLECTION

EP 4 394 617 B1

FIG. 5B

EP 4 394 617 B1

510
1ST SPACE

520
2ND SPACE

530
3RD SPACE

540
4TH SPACE

510
1ST SPACE

520
2ND SPACE

530
3RD SPACE

540
4TH SPACE

free

free

free

BEFORE PERFORMING GARBAGE COLLECTION

AFTER PERFORMING GARBAGE COLLECTION

hot block
401

cold block
403

Invalid(deleted)
hot block
402

# FIG. 6

START — 600

LOADING FILE SYSTEM — 602

RECEIVE FILE I/O REQUEST FROM APPLICATION — 604

610 — WRITE OR SYNC REQUEST?

No → PERFORM FILE I/O — 614

612 — EXTRACT WRITE PATTERN INFORMATION AND STORE IT IN FILE OBJECT

Yes

620 — WRITEBACK PROCESSING NEEDED? — No → END — 630

Yes

622 — EXECUTE WRITEBACK THREAD

624 — LOAD WEIGHT FOR EACH PREDEFINED FEATURE

626 — PREDICT HOT OR COLD FILE TYPE USING WRITE PATTERN INFORMATION STORED IN FILE OBJECT

628 — PERFORM WRITEBACK OPERATION USING HOT/COLD INFORMATION, FOLLOWED BY CLASSIFYING AND STORING FILES BASED ON FILE TYPES

EP 4 394 617 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180129426 A